# EUROPÄISCHE PATENTSCHRIFT

(11) **EP 2 466 782 B1**
(45) Veröffentlichungstag und Bekanntmachung des Hinweises auf die Patenterteilung: **21.02.2018**
(21) Anmeldenummer: 11009920.7
(22) Anmeldetag: 16.12.2011
(51) Int. Cl.: H04L 9/00, H04L 9/06, G06F 21/00, G06F 21/55, G06F 21/77

(54) **Verfahren zum geschützten Ausführen einer kryptographischen Berechnung**
Method for protected execution of a cryptographic calculation
Procédé de réalisation protégée d'un calcul cryptographique

(30) Priorität: 20.12.2010 DE 102010055237
(43) Veröffentlichungstag der Anmeldung: 20.06.2012
(73) Patentinhaber: Giesecke+Devrient Mobile Security GmbH, 81677 München (DE)
(72) Erfinder: Hoffmann, Lars, Dr., 80639 München (DE)

(56) Entgegenhaltungen:
- EP-A1- 1 739 519
- WO-A2-2008/079524
- US-A1- 2009 113 546
- US-B1- 6 249 456

## Beschreibung

Die Erfindung betrifft ein Verfahren zum geschützten Ausführen einer kryptographischen Berechnung, bei der ein kryptographischer Schlüssel verwendet wird, geschützt gegenüber einem Fehlerangriff, der darauf abzielt, den Schlüssel zu verändern, wobei bei dem Verfahren eine der Berechnung entsprechende Kontrollberechnung durchgeführt wird, um einen Fehlerangriff auf den Schlüssel aufzudecken, und falls ein Fehlerangriff auf den Schlüssel aufgedeckt wird, eine Fehlerbehandlungsmaßnahme veranlasst wird.

Fehlerangriffe zielen darauf ab, den bei einer kryptographischen Berechnung verwendeten Schlüssel gezielt zu verändern und hierdurch forciert z.B. manipulierte Ausgangsdaten zu erzeugen. Bei der kryptographischen Berechnung werden z.B. mit Eingangsdaten und dem kryptographischen Schlüssel Ausgangsdaten erzeugt. Ein Vergleich von ohne einen Fehlerangriff erzeugten Ausgangsdaten mit Ausgangsdaten, die unter Einwirkung eines Fehlerangriffs erzeugt wurden, lässt Rückschlüsse auf den Datenwert des bei der kryptographischen Berechnung verwendeten Schlüssels zu. In vielen Fällen ist die kryptographische Berechnung ein Teil einer in Software formulierten Applikation. In diesen Fällen ist an einer unterschiedlichen Reaktion der Applikation, z.B. interner Fehler erkannt bzw. interner Fehler nicht erkannt, erkennbar, ob ein Fehlerangriff auf den Schlüssel erfolgreich stattgefunden hat oder nicht.

Die kryptographische Berechnung wird in einer Recheneinrichtung ausgeführt, beispielsweise einem Mikroprozessor oder einem Coprozessor eines Mikroprozessors, z.B. einem speziellen Krypto-Coprozessor oder Hardware-Beschleuniger, der einem Mikroprozessor zur Ausführung kryptographischer Berechnungen zugeordnet ist. Dem Mikroprozessor oder Coprozessor sind spezielle Schlüsselregister zugewiesen, auf den nur der die kryptographische Berechnung ausführende Mikroprozessor oder Coprozessor lesenden Zugriff hat. Die Schlüsselregister sind - abgesehen vom Zugriff durch den die kryptographische Berechnung ausführenden Mikroprozessor oder Coprozessor - nicht auslesbar. Der Mikroprozessor und ggf. der Coprozessor kann beispielsweise in einer Chipkarte (Mikroprozessorchipkarte, Smart Card) oder einem mobilen Endgerät (z.B. Mobiltelefon, Smartphone, PDA mit Mobiltelefonfunktion oder dergleichen) implementiert sein. Dem Mikroprozessor und/oder Coprozessor können Speicher (z.B. EEPROM, Flash, ROM, RAM) zugeordnet sein, in denen Anwendungen, z.B. Kryptoalgorithmen, sowie Schlüssel, die zur Verarbeitung durch Anwendungen, z.B. Kryptoalgorithmen, vorgesehen sind, abgespeichert sind.

Physisch ist ein Fehlerangriff darauf gerichtet, Hardware zu manipulieren, z.B. Speicherzellen, z.B. die Schlüsselregister eines Mikroprozessors oder Coprozessors (z.B. Krypto-Coprozessors oder Hardware-Beschleunigers), in denen der Schlüssel abgespeichert ist. Der Schlüssel weist eine Mehrzahl von binären Schlüsselbits auf, die alle einen Wert 0 oder 1 haben können. Durch die Werte der Schlüsselbits ist der Wert des Schlüssels festgelegt. Durch einen erfolgreichen Fehlerangriff auf ein Schlüsselbit wird das Schlüsselbit auf den Wert 0 gekippt oder auf den Wert 1 gekippt. In welche Richtung das Schlüsselbit durch den Fehlerangriff gekippt wird, nach 0 oder nach 1, ist durch die bei der Herstellung der Speicherzellen verwendete Speichertechnologie festgelegt. Je nachdem, ob ein Schlüsselbit zu Anfang den Wert 0 oder 1 hatte, wird es durch einen Fehlerangriff also geändert oder nicht geändert. Durch sequentielles Kippen der einzelnen Schlüsselbits und Auswerten der Reaktion des Mikroprozessors oder Coprozessors oder einer darauf ablaufenden Anwendung auf das Kippen lassen sich die Schlüsselbits nacheinander indirekt auslesen. Nicht nur Schlüsselregister können Ziel von Fehlerangriffen sein, sondern auch andere Hardware-Komponenten wie z.B. Datenleitungen zwischen dem Schlüsselregister und dem Coprozessor.

WO 2008/079524 A2 beschreibt ein Verfahren nach dem Oberbegriff von Anspruch 1, d.h. ein Verfahren zum geschützten Ausführen einer kryptographischen Berechnung, bei der ein kryptographischer Schlüssel verwendet wird, geschützt gegenüber einem Fehlerangriff, der darauf abzielt, den Schlüssel zu manipulieren, wobei bei dem Verfahren eine der Berechnung entsprechende Kontrollberechnung durchgeführt wird, um einen Fehlerangriff auf den Schlüssel aufzudecken, und, im Fall, dass ein Fehlerangriff auf den Schlüssel aufgedeckt wird, eine Fehlerbehandlungsmaßnahme veranlasst wird. Genauer wird beim Verfahren aus WO 2008/079524 A2 mit bekannten Eingangsdaten und einem zu schützenden Schlüssel ein Verschlüsselungsergebnis und eine Prüfsumme über das Verschlüsselungsergebnis erzeugt und als "Verifikationssignatur" abgespeichert. Bevor der zu schützende Schlüssel verwendet wird, wird die Integrität des Schlüssels überprüft, indem das abgespeicherte Verschlüsselungsergebnis mit dem zu schützenden Schlüssel entschlüsselt wird. Falls das Ergebnis der Entschlüsselung von den erwarteten Eingangsdaten abweicht, werden alle Schlüsseldaten gelöscht und eine Markierung gesetzt, dass ein Fehlerangriff aufgetreten ist. Der Schlüssel ist zu seinem weitergehenden Schutz maskiert abgelegt.

WO 2008/079524 A2 liefert einen guten Schutz für einen einzelnen kryptographischen Schlüssel. Häufig stehen jedoch mehrere kryptographische Schlüssel zur Verwendung zur Auswahl. Beim Verfahren aus WO 2008/079524 A2 müsste somit für jeden Schlüssel ein Verschlüsselungsergebnis abgespeichert werden. Dies macht das Verfahren speicherintensiv.

Der Erfindung liegt die Aufgabe zu Grunde, ein effizientes Verfahren zum gegen Fehlerangriffe geschützten Ausführen einer kryptographischen Berechnung zu schaffen.

Das Dokument EP 1 739 519 A1 offenbart ein weiteres Verfahren, das dem Oberbegriff von Anspruch 1 entspricht.

Genauer wird beim Verfahren aus EP 1 739 519 A1 zum Schutz eines DES Schlüssels für eine DES Verschlüsselung - zusätzlich zur DES Verschlüsselung einer Nachricht mit dem Schlüssel - eine Kontrollberechnung (reference calculation) durchgeführt, bei der eine spezielle Nachricht, z.B. 0x00, mit dem zu schützenden Schlüssel DES verschlüsselt wird. Das Ergebnis der Kontrollberechnung wird mit dem für die DES Verschlüsselung erwarteten Ergebnis verglichen.

Die Aufgabe wird gelöst durch ein Verfahren nach Anspruch 1. Vorteilhafte Ausgestaltungen der Erfindung sind in den abhängigen Ansprüchen angegeben.

Das erfindungsgemäße Verfahren gemäß dem unabhängigen Anspruch 1 ist zum geschützten Ausführen einer kryptographischen Berechnung eingerichtet, bei der ein kryptographischer Schlüssel verwendet wird, und ist geschützt gegenüber einem Fehlerangriff, der darauf abzielt, den Schlüssel zu manipulieren. Bei dem Verfahren wird indirekt eine Integritätsüberprüfung des Schlüssels durchgeführt, indem eine der Berechnung entsprechende Kontrollberechnung durchgeführt wird, um einen Fehlerangriff auf den Schlüssel aufzudecken. Im Fall, dass ein Fehlerangriff auf den Schlüssel aufgedeckt wird, wird eine Fehlerbehandlungsmaßnahme veranlasst.

Das Verfahren nach Anspruch 1 zeichnet sich dadurch aus, dass bei der Kontrollberechnung ein für unterschiedliche Schlüssel gleicher ausgewählter Kontrollschlüssel und gleiche ausgewählte Kontroll-Eingangsdaten verwendet werden. Dadurch, dass für unterschiedliche Schlüssel nur ein einziger, für unterschiedliche Schlüssel gleicher Kontrollschlüssel und gleiche ausgewählte Kontroll-Eingangsdaten verwendet werden, müssen ggf. nur für diesen einzigen Kontrollschlüssel Referenzdaten abgespeichert werden, an Hand derer durch Vergleich mit neu berechneten Daten ein Fehlerangriff aufgedeckt werden kann. Hierdurch kann Speicherplatz gespart werden, und das Verfahren ist somit besonders effizient.

Daher ist gemäß Anspruch 1 ein Verfahren effizientes Verfahren zum geschützten Ausführen einer kryptographischen Berechnung geschaffen.

Bei einer Implementierung des Verfahrens z.B. in Chipkarten, kann der Kontrollschlüssel natürlich für jede Chipkarte unterschiedlich sein und von einer Chipkarte zur anderen variieren. Der Kontrollschlüssel kann aber auch für mehrere Chipkarten gleich sein.

Optional werden nicht nur eine sondern mehrere, z.B. zwei oder drei, Kontrollberechnungen durchgeführt, um die Wahrscheinlichkeit zu verringern oder so weit wie möglich auszuschließen, dass die Kontrollberechnung zufällig in einem Zeitfenster erfolgt, in dem gerade kein Fehlerangriff stattfindet, obwohl eigentlich Berechnung und Kontrollberechnung Fehlerangriffen ausgesetzt sind.

Der Kontrollschlüssel ist nicht notwendig gleich dem bei der Berechnung verwendeten Schlüssel, und ist sogar in der Regel unterschiedlich vom bei der Berechnung verwendeten Schlüssel. Der Kontrollschlüssel kann aber zufällig mit dem bei der Berechnung verwendeten Schlüssel übereinstimmen.

Die Berechnung ist beispielsweise eine Verschlüsselung oder Entschlüsselung in einem symmetrischen oder asymmetrischen Kryptosystem, z.B. in einem Verfahren wie DES (data encryption standard) oder AES (advanced encryption standard).

Wahlweise ist der Schlüssel, der bei der Berechnung verwendet wird, ein statischer Schlüssel. Wahlweise ist der bei der Berechnung verwendete Schlüssel ein dynamischer Schlüssel, beispielsweise ein dynamischer Sitzungsschlüssel (session key), d.h. ein nur einmal zu verwendender, zufällig erzeugter Schlüssel.

Wahlweise wird als ausgewählter Kontrollschlüssel ein Schlüssel verwendet, der durch einen Fehlerangriff mit besonders hoher Zuverlässigkeit verändert wird. Die Ausführungsform hat den Vorteil, dass ein Fehlerangriff mit besonders hoher Wahrscheinlichkeit und Zuverlässigkeit aufgedeckt wird. Bei einem Schlüssel, der einen solchen Wert hat, dass er bei einem Fehlerangriff gleich bleibt, würde der Fehlerangriff aus Sicht der Berechnung bei der Kontrollberechnung unentdeckt bleiben und der Angreifer kann durch Fehlerangriffe auf die eigentliche Berechnung Rückschlüsse auf den Wert des Schlüssels ziehen. Mit dem speziellen Kontrollschlüssel dagegen, der mit besonders hoher Zuverlässigkeit verändert wird, werden auch solche Fehlerangriffe erkannt, die den für die Berechnung verwendeten oder noch zu verwendenden eigentlichen Schlüssel nicht verändern. Somit ist das Verfahren besonders zuverlässig.

Wahlweise haben der Schlüssel und der Kontrollschlüssel jeweils eine Mehrzahl von binären Schlüsselbits, die jeweils einen Wert Null oder Eins haben können, und durch deren Werte der Wert des Schlüssels festgelegt ist.

Wahlweise wird der Kontrollschlüssel dadurch durch einen Fehlerangriff mit besonders hoher Zuverlässigkeit verändert, dass alle Schlüsselbits des Kontrollschlüssels den gleichen geeignet gewählten Wert haben. Welcher Wert geeignet ist, ist durch die Fertigungstechnologie festgelegt, in der ein Speicherbereich, in dem der Schlüssel bzw. Kontrollschlüssel während des Fehlerangriffs abgelegt ist, gefertigt ist.

Wahlweise wird der Schlüssel für die Berechnung und der Kontrollschlüssel für die Kontrollberechnung jeweils in Speicherzellen eines Schlüsselspeichers, z.B. eines Schlüsselregisters, bereitgehalten. Z.B. haben entsprechend der bei der Herstellung der Speicherzellen, insbesondere des Schlüsselregisters, verwendeten Speichertechnologie alle Schlüsselbits des Kontrollschlüssels den Wert Null, falls durch einen Fehlerangriff ein Kippen der Bits auf den Wert Eins bewirkt wird, bzw. haben alle Schlüsselbits des Kontrollschlüssels den Wert Eins, falls durch einen Fehlerangriff ein Kippen der Bits auf den Wert Null bewirkt wird.

Beispielsweise wird der Schlüssel durch einen Fehlerangriff dann nicht verändert, wenn ein Fehlerangriff, der zum Kippen eines Schlüsselbits auf Eins führt, auf ein Schlüsselbit erfolgt, das bereits den Wert Eins hat. Daraus, dass sich das Ergebnis der Berechnung auf den Fehlerangriff hin nicht ändert, lernt der Angreifer, der den Fehlerangriff durchführt, dass das Schlüsselbit, auf das er gerade einen Angriff durchgeführt hat, den Wert Eins hat. Mit der aus dem Stand der Technik bekannten Kontrollberechnung bleibt ein solcher Fehlerangriff unentdeckt, mit der Erfindung gemäß der hier beschriebenen Variante wird der Fehlerangriff erkannt.

Wahlweise ist die Kontrollberechnung zur Berechnung komplementär. Beispielsweise besteht die Berechnung in einer Verschlüsselung mit dem Schlüssel und die Kontrollberechnung in einer Entschlüsselung mit dem Kontrollschlüssel oder mit einem zum Kontrollschlüssel komplementären Komplementär-Kontrollschlüssel.

Wahlweise ist die Kontrollberechnung zur Berechnung gleichartig. Beispielsweise besteht die Berechnung in einer Verschlüsselung mit dem Schlüssel und die Kontrollberechnung in einer Verschlüsselung mit dem Kontrollschlüssel. Alternativ sind Berechnung und Kontrollberechnung Entschlüsselungen. Die Variante, dass die Berechnung und die Kontrollberechnung gleichartige Berechnungen sind, ist besonders vorteilhaft, da gleichartige Berechnungen untereinander eine gute Resistenz gegen Seitenkanalangriffe wie z.B. Stromanalyse haben. Die Variante, wonach die Berechnung und die Kontrollberechnung gleichartig sind, ist daher besonders sicher.

Die kryptographische Berechnung und die Kontrollberechnung werden ausgeführt. Dabei wird vorzugsweise zufallsgesteuert festgelegt, in welcher Reihenfolge die Berechnung und die Kontrollberechnung ausgeführt werden. Hierdurch weiß ein Angreifer, der einen Fehlerangriff plant, nicht, ob zum Zeitpunkt des Angriffs gerade die Berechnung oder die Kontrollberechnung ausgeführt wird. Wüsste er dies, so könnte er versuchen, gezielt während der Kontrollberechnung keine Fehlerangriffe durchzuführen und nur während der Berechnung Fehlerangriffe durchzuführen, um die mittels der Kontrollberechnung beabsichtigte Integritätsprüfung zu umgehen und dadurch den Fehlerangriff zu verheimlichen. Die zufallsgesteuerte Ausführung von Berechnung und Kontrollberechnung bietet somit zusätzliche Sicherheit.

Wahlweise wird der Kontrollschlüssel in einen ersten Teil-Kontrollschlüssel und einen zweiten Teil-Kontrollschlüssel zerlegt, die zueinander komplementär sind.

Diese Variante ist z.B. besonders vorteilhaft für einen Kontrollschlüssel, der durch einen Fehlerangriff mit besonders hoher Wahrscheinlichkeit verändert wird. Ein solcher Kontrollschlüssel ist z.B. einer, der aus einer Mehrzahl von Schlüsselbits besteht, die alle den gleichen Wert haben, z.B. lauter Nullen oder lauter Einsen. Die beiden komplementären Teil-Kontrollschlüssel bestehen dann aus der gleichen Mehrzahl von Schlüsselbits, und bestehen aus einer zufälligen Folge von Nullen und Einsen, so dass die Operations-Summe beider Teil-Kontrollschlüssel gemäß einer vorbestimmten Operation (z.B. XOR oder AND) einen Gesamt-Kontrollschlüssel mit nur gleichen Schlüsselbits, z.B. lauter Nullen oder lauter Einsen, ergibt. Wahlweise sind die zufälligen Folgen von Nullen und Einsen der Teil-Kontrollschlüssel balanziert, d.h., sie bestehen aus annähernd der gleichen Anzahl Nullen wie Einsen. Wahlweise wird für die Kontrollberechnung mit jedem Teil-Kontrollschlüssel eine gleichartige Teil-Kontrollberechnung durchgeführt. Hierdurch durchläuft über die beiden Teil-Kontrollberechnungen hinweg jede Schlüsselbitposition des gesamten Kontrollschlüssels eine Kontrollberechnung mit einem Bitwert, der bei einen Fehlerangriff geändert wird. Die Zuverlässigkeit, mit der Fehlerangriffe erkannt werden, ist also identisch zu derjenigen, die erzielt wird, wenn die Kontrollberechnung mit einem unzerlegten Kontrollschlüssel, z.B. mit lauter identischen Schlüsselbits, in einem einzigen Rechenschritt durchgeführt wird. Die Zerlegung des Kontrollschlüssels in komplementäre Teil-Kontrollschlüssel liefert allerdings den zusätzlichen Vorteil, dass die Kontrollberechnung mit einem Teil-Kontrollschlüssel, der Schlüsselbits unterschiedlichen Werts hat, z.B. ein unauffälligeres Stromprofil liefert als eine Berechnung mit einem Kontrollschlüssel mit lauter Schlüsselbits gleichen Werts. Die Zerlegung des Kontrollschlüssels in zwei zueinander komplementäre Teil-Kontrollschlüssel verleiht dem Verfahren somit eine erhöhte Resistenz gegen Seitenkanalangriffe.

Die Zerlegung des Kontrollschlüssels in zueinander komplementäre Teil-Kontrollschlüssel liefert zudem den weiteren Vorteil, dass Fehlerangriffe auch dann mit großer Zuverlässigkeit detektiert werden können, wenn die Kipprichtung, in welche Bits in Reaktion auf einen Fehlerangriff kippen, nicht bekannt ist, z.B. weil die verwendete Speichertechnologie unbekannt ist. Dieser Vorteil gilt insbesondere für alle möglichen Kontrollschlüssel, z.B. nicht nur für Kontrollschlüssel mit lauter gleichen Bits. Jedes Schlüsselbit, das in dem einen Teil-Kontrollschlüssel den Wert Eins hat, hat in dem anderen Teil-Kontrollschlüssel den Wert Null, und umgekehrt. Bei feststehender Kipprichtung für Fehlerangriffe wird ein Schlüsselbit, das in dem ersten Teil-Kontrollschlüssel bei einem Fehlerangriff unverändert bleibt, dafür in dem zweiten Teil-Kontrollschlüssel gekippt. Bei umgekehrter Kipprichtung für Fehlerangriffe wird dasselbe Schlüsselbit im ersten Teil-Kontrollschlüssel gekippt und bleibt im zweiten Teil-Kontrollschlüssel unverändert. Insgesamt steht für jede Schlüsselbitposition ein Teil-Kontrollschlüssel-Bit zur Verfügung, entweder im ersten oder im zweiten Teil-Kontrollschlüssel, das bei einem Fehlerangriff mit Sicherheit kippt, unabhängig davon, in welche Richtung das Kippen in Reaktion auf einen Fehlerangriff erfolgt, nach Eins oder nach Null.

Im Vergleich zum Verfahren mit einem unzerlegten Kontrollschlüssel müssen bei der Variante mit einem in zwei Teilschlüssel zerlegten Kontrollschlüssel zwar zwei Teil-Kontrollschlüssel abgespeichert werden statt nur eines einzigen Kontrollschlüssels. Im Vergleich dazu, für jeden denkbaren Schlüssel einen eigenen Kontrollschlüssel abspeichern zu müssen, wie dies nach dem Stand der Technik erforderlich ist, ist der Speicheraufwand für das Abspeichern der zwei Teil-Kontrollschlüssel jedoch immer noch deutlich geringer.

Wahlweise, falls gewünscht ist, Zeit zu sparen, kann die Kontrollberechnung mit nur einem einzelnen der beiden Teil-Kontrollschlüssel erfolgen, entweder dem ersten oder dem zweiten Teil-Kontrollschlüssel, mit dem Nachteil einer reduzierten Sicherheit, aber mit einem Vorteil einer größeren Geschwindigkeit, d.h. einer besseren Performanz.

Wahlweise umfasst das Verfahren zusätzlich einen vorbereitenden Schritt, in welchem Kontroll-Eingangsdaten und der Kontrollschlüssel zu Kontroll-Ausgangsdaten verarbeitet werden, und die Kontroll-Eingangsdaten als Referenz-Kontroll-Eingangsdaten und die Kontroll-Ausgangsdaten als Referenz-Kontroll-Ausgangsdaten abgespeichert werden. Bei der Berechnung werden in diesem Fall Eingangsdaten und der kryptographische Schlüssel zu Ausgangsdaten verarbeitet. Bei der Kontrollberechnung werden die Referenz-Kontroll-Eingangsdaten und der Kontrollschlüssel zu Kontroll-Ausgangsdaten verarbeitet (falls Berechnung und Kontrollberechnung gleichartig sind, z.B. beide eine Verschlüsselung) oder die Referenz-Kontroll-Ausgangsdaten und ein dem Kontrollschlüssel entsprechender komplementärer Schlüssel zu Kontroll-Eingangsdaten verarbeitet (falls Berechnung und Kontrollberechnung komplementär sind, z.B. die eine eine Verschlüsselung, die andere eine Entschlüsselung). Weiter werden vorzugsweise die in der Kontrollberechnung berechneten Kontroll-Ausgangsdaten mit den abgespeicherten Referenz-Kontroll-Ausgangsdaten verglichen (falls Berechnung und Kontrollberechnung gleichartig sind) oder die in der Kontrollberechnung berechneten Kontroll-Eingangsdaten mit den abgespeicherten Referenz-Kontroll-Eingangsdaten verglichen (falls Berechnung und Kontrollberechnung komplementär sind). Ein Fehlerangriff wird daran erkannt und somit aufgedeckt, dass die berechneten Daten (Kontroll-Eingangsdaten oder Kontroll-Ausgangsdaten) von den abgespeicherten Daten (Referenz-Kontroll-Eingangsdaten oder Referenz-Kontroll-Ausgangsdaten) abweichen.

Insbesondere in dem Fall, wenn der Schlüssel für die Berechnung ein dynamischer Schlüssel ist, z.B. ein Sitzungsschlüssel (session key), ist die Sicherheit auch bei der Berechnung der Referenzdaten besonders gut gewährleistet. Denn für dynamische Schlüssel müssten im Stand der Technik auch die Referenzdaten dynamisch berechnet werden. Gemäß der Erfindung können dagegen die Referenzdaten optional in einer gesicherten Umgebung, die vor Fehlerangriffen abgeschirmt ist, vorab berechnet werden. Zur Laufzeit der Berechnung und der Kontrollberechnung in einer beliebigen Umgebung braucht bei dieser Option keine Referenzdatenberechnung mehr durchgeführt zu werden.

Im Fall dass der Kontrollschlüssel in Teilschlüssel (Teil-Kontrollschlüssel) zerlegt ist, werden im vorbereitenden Schritt für jeden Teilschlüssel Kontroll-Eingangsdaten und der Kontrollschlüssel zu Kontroll-Ausgangsdaten verarbeitet und für jeden Teilschlüssel die Kontroll-Eingangsdaten als Referenz-Kontroll-Eingangsdaten und die Kontroll-Ausgangsdaten als Referenz-Kontroll-Ausgangsdaten abgespeichert.

Wahlweise wird über die Kontroll-Eingangsdaten und/oder die Kontroll-Ausgangsdaten jeweils eine Prüfsumme gebildet und zusätzlich oder alternativ zu den Kontroll-Eingangsdaten bzw. den Kontroll-Ausgangsdaten abgespeichert. Bei der Kontrollberechnung werden die Kontroll-Eingangsdaten bzw. die Kontroll-Ausgangsdaten oder wird die Prüfsumme darüber verwendet. Die Prüfsummenbildung stellt eine an sich bekannte Maßnahme dar, um Speicherplatz zu sparen, da eine Prüfsumme über Daten weniger Speicher benötigt als die vollständigen Daten, und die auch bei der Erfindung vorteilhaft anwendbar ist. Beispielsweise wird, falls Berechnung und Kontrollberechnung gleichartige Berechnungen sind (z.B. beides Verschlüsselungen) über die Kontroll-Ausgangsdaten eine Prüfsumme gebildet und lediglich die Prüfsumme als Referenz-Kontroll-Ausgangsdaten abgespeichert. Die Kontroll-Eingangsdaten werden direkt als Referenz-Kontroll-Eingangsdaten abgespeichert. Bei der Kontrollberechnung werden die Referenz-Kontroll-Eingangsdaten verarbeitet (z.B. verschlüsselt), über das Verschlüsselungsergebnis eine Prüfsumme gebildet und diese Prüfsumme mit der als Referenz-Kontroll-Ausgangsdaten abgespeicherten Prüfsumme verglichen. Bei Berechnung und Kontrollberechnung, die zueinander komplementär sind, werden z.B. analog die Kontroll-Eingangsdaten als Prüfsumme abgespeichert, die Kontroll-Ausgangsdaten dagegen vollständig.

Als Fehlerbehandlungsmaßnahme wird beispielsweise mindestens eine der folgenden Maßnahmen durchgeführt. Verändern des Werts eines Fehlerzählers (Hochzählen oder Herunterzählen), Löschen von Speicherzellen, z.B. des nichttflüchtigen Speichers NVM, in dem der geheime Schlüssel dauerhaft abgespeichert ist, Deaktivieren zumindest eines Teils einer die Berechnung und die Kontrollberechnung durchführenden Einrichtung, z.B. eines Mikroprozessors oder Krypto-Coprozessors, z.B. Hardware-Beschleunigers. Wahlweise wird, falls der Wert des Fehlerzählers einen definierten Grenzwert erreicht oder überschreitet, eine oder mehrere der anderen angeführten Fehlerbehandlungsmaßnahmen veranlasst und/oder durchgeführt.

Wahlweise werden bei dem Verfahren die Berechnung und die Kontrollberechnung in einer Recheneinrichtung ausgeführt, beispielsweise einem Krypto-Coprozessor, der mindestens ein Schlüssel-Registerspeicher zugeordnet ist. Auf den Speicherinhalt des Schlüssel-Registerspeichers hat ausschließlich die Recheneinrichtung lesende Zugriffsmöglichkeit. Ein direkter Zugriff auf den Schlüssel-Registerspeicher, um seinen Speicherinhalt auszulesen und zu kontrollieren ist dagegen nicht möglich. Zur Ausführung der Berechnung wird der Schlüssel im Schlüssel-Registerspeicher bereitgehalten. Zur Ausführung der Kontrollberechnung wird der Kontrollschlüssel im Schlüssel-Registerspeicher bereitgehalten. Das Verfahren gemäß der Erfindung ist bei einer solchen Recheneinrichtung mit einem internen, von extern lesend nicht-zugänglichen Schlüssel-Registerspeicher besonders vorteilhaft. Wenn ein erfolgreicher Fehlerangriff auf den Schlüssel-Registerspeicher durchgeführt wird, wird der Speicherinhalt des Schlüssel-Registerspeichers, also der darin abgespeicherte Schlüssel oder Kontrollschlüssel verändert. Die Veränderung des Schlüssel oder Kontrollschlüssel kann nicht direkt überprüft werden, da der Schlüssel-Registerspeicher nicht ausgelesen werden kann. Mittels der Kontrollberechnung wird die Integrität des Schlüssel-Registerspeichers indirekt überprüft, indem ein Vergleich durchgeführt wird zwischen einem Rechenergebnis der Kontrollberechnung mit bekannten Daten einerseits und einem zu erwartenden Ergebnis andererseits.

Als Recheneinrichtung ist beispielsweise ein einem Mikroprozessor zugeordneter Krypto-Coprozessor vorgesehen. Der Mikroprozessor, der Krypto-Coprozessor und weitere Komponenten wie Schlüsselregister und flüchtige (z.B. RAM) und nichtflüchtige (z.B. ROM, EEPROM, Flash) Speicher können in eine Rechenanordnung implementiert sein, beispielsweise eine Chipkarte oder Smart Card oder ein mobiles Endgerät wie z.B. ein Mobiltelefon oder Smartphone.

Im Folgenden wird die Erfindung an Hand von Ausführungsbeispielen und unter Bezugnahme auf die Zeichnung näher erläutert, in der zeigen:
- Fig. 1: eine beispielhafte, für die Erfindung geeignete Chipkarte;
- Fig. 2: ein Ablaufdiagramm zur Veranschaulichung eines Verfahrens gemäß einer Ausführungsform der Erfindung;
- Fig. 3: eine Grafik zur Veranschaulichung eines Fehlerangriffs;
- Fig. 4: eine Zerlegung eines Kontrollschlüssels in zwei Teilschlüssel.

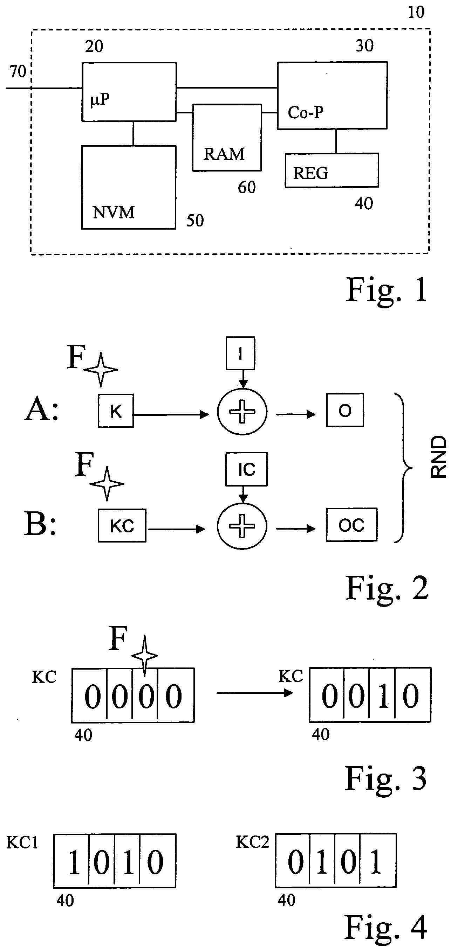

Fig. 1 zeigt in schematisierter Darstellung eine beispielhafte, für die Erfindung geeignete Chipkarte 10 mit einem Mikroprozessor 20 und einem dem Mikroprozessor 20 zugeordneten Krypto-Coprozessor 30 Co-P, z.B. einem sogenannten Hardware-Beschleuniger. Der Mikroprozessor 20 delegiert mit kryptographischen Schlüsseln K auszuführende kryptographische Berechnungen wie z.B. Verschlüsselungen und Entschlüsselungen an den Krypto-Coprozessor 30. Dem Krypto-Coprozessor 30 sind ein oder mehrere Schlüsselregister 40 REG zugeordnet, auf die nur der Krypto-Coprozessor 30 lesenden Zugriff hat. Dem Mikroprozessor 20 ist ein nichtflüchtiger Speicher 50 NVM zugeordnet, z.B. ein EEPROM oder/und Flash-Speicher oder/und ROM-Speicher. Ein flüchtiger Arbeitsspeicher 60 RAM ist sowohl für den Mikroprozessor 20 als auch den Krypto-Coprozessor 30 zugänglich. Der Mikroprozessor 20 hat zumindest eine Schnittstelle 70, wahlweise kontaktbehaftet oder kontaktlos, oder beides, über die von extern, d.h. von außerhalb der Chipkarte 10, auf den Mikroprozessor 20 zugegriffen werden kann. Der kryptographische Schlüssel K oder mehrere kryptographische Schlüssel K ist bzw. sind in maskierter Form im NVM dauerhaft abgespeichert. Ein Kontrollschlüssel KC in maskierter Form, Referenz-Kontroll-Eingangsdaten ICR und Referenz-Kontroll-Ausgangsdaten OCR (oder lediglich eine Prüfsumme über OCR), die das Ergebnis einer Verschlüsselung der Referenz-Kontroll-Eingangsdaten ICR mit dem Kontrollschlüssel KC darstellen, sind ebenfalls im NVM 50 dauerhaft abgespeichert. Zudem sind im NVM 50 Anwendungen wie Kryptalgorithmen abgespeichert.

Fig. 2 zeigt ein Ablaufdiagramm zur Veranschaulichung eines Verfahrens gemäß einer Ausführungsform der Erfindung, das beispielhaft in einer Chipkarte 10 nach Fig. 1 ausgeführt wird. Zum Ausführen einer kryptographischen Berechnung A werden, z.B. über die Schnittstelle 70, Eingangsdaten I in den Arbeitsspeicher 60 eingespeist, und der kryptographische Schlüssel K wird aus dem nichtflüchtigen Speicher 50 in ein Schlüsselregister 40 geladen und demaskiert. Der Krypto-Coprozessor 30 verschlüsselt (Operationssymbol "+") die Eingangsdaten I mit dem demaskierten Schlüssel K und erzeugt Ausgangsdaten O. Während der Schlüssel K bzw. der Kontrollschlüssel KC (s.u.) im Schlüsselregister 40 liegt, besteht die Gefahr, dass ein Fehlerangriff F auf das Schlüsselregister 40 erfolgt, und dadurch Schlüsseldaten ausgespäht werden. Eine direkte Überprüfung des Inhalts des Schlüsselregisters 40, z.B. über die Schnittstelle 70, ist nicht möglich, da nur der Krypto-Coprozessor 30 lesenden Zugriff auf die Schlüsselregister 40 hat. Statt dessen wird die Integrität des Schlüsselregisters 40 indirekt mittels der Kontrollberechnung B überprüft. Zum Ausführen der kryptographischen Kontrollberechnung B werden die Referenz-Kontroll-Eingangsdaten ICR und die Referenz-Kontroll-Ausgangsdaten OCR aus dem NVM 50 in den Arbeitsspeicher 60 RAM geladen. Der Kontrollschlüssel KC wird aus dem NVM 50 in dasselbe Schlüsselregister 40 geladen wie zuvor der Schlüssel K und wird demaskiert. Der Krypto-Coprozessor 30 verschlüsselt (Operationssymbol "+") die Referenz-Kontroll-Eingangsdaten ICR mit dem Kontrollschlüssel KC und erzeugt hierdurch Kontroll-Ausgangsdaten OC. Die Reihenfolge, in der die Berechnung A und die Kontrollberechnung B ausgeführt werden, ist zufällig gesteuert, wie durch das Symbol "RND" angedeutet ist. Die Kontroll-Ausgangsdaten OC werden mit den Referenz-Kontroll-Ausgangsdaten OCR verglichen. Falls OC und OCR unterschiedlich sind, wird ein Fehlerzähler hochgezählt, und falls der Wert des Fehlerzählers dabei einen Grenzwert erreicht, wird die Chipkarte 10 gesperrt.

Fig. 3 zeigt eine Grafik zur Veranschaulichung eines Fehlerangriffs F auf ein Schlüsselregister 40, in dem ein kryptographischer Kontrollschlüssel KC mit einer Mehrzahl von Bits abgelegt ist, die alle den Wert Null haben. Durch den Fehlerangriff F wird eines der Bits, in Fig. 3 das dritte Bit, gezielt manipuliert. Hierdurch wird das Bit nach Eins gekippt, entsprechend der Speichertechnologie, in der das Schlüsselregister 40 gefertigt ist. In einer Berechnung A oder B wie in Fig. 2 veranschaulicht führt das Kippen des Bits zu veränderten Ausgangsdaten O bzw. OC gegenüber der Berechnung ohne Kippen. Die Tatsache, dass sich die Ausgangsdaten O bzw. OC ändern, zeigt an, dass das Bit auf den Fehlerangriff F hin gekippt ist und teilt somit den Wert des Bits mit. Unveränderte Ausgangsdaten O bzw. OC zeigen an, dass ein Bit nicht gekippt ist und somit bereits den Zielzustand des Fehlerangriffs F hatte oder nicht angegriffen worden ist.

Fig. 4 zeigt eine Zerlegung eines Kontrollschlüssels KC, der lauter gleiche Schlüsselbits aufweist, in zwei komplementäre Teilschlüssel (Teil-Kontrollschlüssel) KC1, KC2. Die XOR-Summe aus KC1 = 1010 und KC2 = 0101 ergibt KC = KC1 XOR KC2 = 1010 XOR 0101 = 1111, den mit Sicherheit kippenden Kontrollschlüssel KC für Fehlerangriffe, die ein Kippen von Bits nach Null bewirken. Die AND-Summe aus KC1 = 1010 und KC2 = 0101 ergibt KC = KC1 AND KC2 = 1010 AND 0101= 0000, den mit Sicherheit kippenden Kontrollschlüssel KC für Fehlerangriffe, die ein Kippen von Bits nach Eins bewirken. Beim ersten Teilschlüssel KC1 kippen bei einem bitweisen Fehlerangriff F, der ein Kippen nach Null bewirkt, die Bits Eins und Drei, die Bits Zwei und Vier bleiben unverändert, beim zweiten Teilschlüssel KC2 kippen bei dem bitweisen Fehlerangriff F die Bits Zwei und Vier, Eins und Drei bleiben unverändert. Bei einem Fehlerangriff, der ein Kippen nach Eins bewirkt, ist die Situation umgekehrt.

Eine andere Möglichkeit als die in Fig. 4 gezeigte, einen Kontrollschlüssel KC mit Wert 0000 oder 1111 zu zerlegen ist, für den ersten Teilschlüssel KC1 = 1111 und für den komplementären zweiten Teilschlüssel KC2 = 0000 zu wählen. Die XOR-Summe der beiden Teilschlüssel KC1, KC2 ergibt KC1 XOR KC2 = 1111 XOR 0000 = 1111. Die AND-Summe der beiden Teilschlüssel KC1, KC2 ergibt KC1 AND KC2 = 1111 AND 0000 = 0000.

## Patentansprüche

1. Verfahren zum geschützten Ausführen einer kryptographischen Berechnung (A), bei der ein kryptographischer Schlüssel (K) verwendet wird, geschützt gegenüber einem Fehlerangriff (F), der darauf abzielt, den Schlüssel (K) zu verändern, wobei bei dem Verfahren
- mindestens eine der Berechnung (A) entsprechende Kontrollberechnung (B) durchgeführt wird, um einen Fehlerangriff (F) auf den Schlüssel (K) aufzudecken, und,
- im Fall, dass ein Fehlerangriff (F) auf den Schlüssel (K) aufgedeckt wird, eine Fehlerbehandlungsmaßnahme veranlasst wird,
**dadurch gekennzeichnet, dass**
bei der Kontrollberechnung (B) ein für unterschiedliche Schlüssel gleicher ausgewählter Kontrollschlüssel (KC) und gleiche ausgewählte Kontroll-Eingangsdaten (IC) verwendet werden.

2. Verfahren nach Anspruch 1, wobei als ausgewählter Kontrollschlüssel (KC) ein Schlüssel verwendet wird, der durch einen Fehlerangriff (F) mit besonders hoher Zuverlässigkeit verändert wird.

3. Verfahren nach Anspruch 1 oder 2, wobei der Schlüssel (K) und der Kontrollschlüssel (KC) jeweils eine Mehrzahl von binären Schlüsselbits haben, die jeweils einen Wert Null oder Eins haben können, und durch deren Werte der Wert des Schlüssels (K) bzw. des Kontrollschlüssels (KC) festgelegt ist, und wobei alle Schlüsselbits des Kontrollschlüssels (KC) den gleichen geeignet gewählten Wert, Null oder Eins, haben.

4. Verfahren nach einem der Ansprüche 1 bis 3, wobei zufallsgesteuert festgelegt wird, in welcher Reihenfolge die Berechnung (A) und die Kontrollberechnung (B) ausgeführt werden.

5. Verfahren nach einem der Ansprüche 1 bis 4, wobei der Kontrollschlüssel (KC) in einen ersten Teil-Kontrollschlüssel (KC1) und einen zweiten Teil-Kontrollschlüssel (KC2) zerlegt wird, die zueinander komplementär sind, und wobei bei der Kontrollberechnung (B) entweder der erste Teil-Kontrollschlüssel (KC1) und der zweite Teil-Kontrollschlüssel (KC2) verwendet werden oder alternativ der erste Teil-Kontrollschlüssel (KC1) verwendet wird oder alternativ der zweite Teil-Kontrollschlüssel (KC2) verwendet wird.

6. Verfahren nach einem der Ansprüche 1 bis 5, wobei in einem vorbereitenden Schritt:
- Kontroll-Eingangsdaten (IC) und der Kontrollschlüssel (KC) zu Kontroll-Ausgangsdaten (OC) verarbeitet werden, und
- die Kontroll-Eingangsdaten (IC) als Referenz-Kontroll-Eingangsdaten (ICR) und die Kontroll-Ausgangsdaten (OC) als Referenz-Kontroll-Ausgangsdaten (OCR) abgespeichert werden, und wobei
- bei der Berechnung Eingangsdaten (I) und der kryptographische Schlüssel (K) zu Ausgangsdaten (O) verarbeitet werden, und
- bei der Kontrollberechnung die Referenz-Kontroll-Eingangsdaten (ICR) und der Kontrollschlüssel (KC) zu Kontroll-Ausgangsdaten (OC) verarbeitet werden oder die Referenz-Kontroll-Ausgangsdaten (OCR) und ein dem Kontrollschlüssel (KC) entsprechender komplementärer Schlüssel zu Kontroll-Eingangsdaten (IC) verarbeitet werden.

7. Verfahren nach Anspruch 6, wobei über die Kontroll-Eingangsdaten (IC) und/oder die Kontroll-Ausgangsdaten (OC) jeweils eine Prüfsumme gebildet wird und zusätzlich oder alternativ zu den Kontroll-Eingangsdaten (IC) bzw. den Kontroll-Ausgangsdaten (OC) abgespeichert wird, und wobei bei der Kontrollberechnung die Kontroll-Eingangsdaten (IC) bzw. die Kontroll-Ausgangsdaten (OC) oder die Prüfsumme darüber verwendet wird.

8. Verfahren nach einem der Ansprüche 1 bis 7, wobei als Fehlerbehandlungsmaßnahme mindestens eine der folgenden Maßnahmen durchgeführt wird: Verändern des Werts eines Fehlerzählers, Löschen von Speicherzellen eines Speichers (NVM 50), Deaktivieren zumindest eines Teils einer die Berechnung und die Kontrollberechnung durchführenden Einrichtung (µP 20, Co-P 30).

9. Verfahren nach einem der Ansprüche 1 bis 8, wobei die Berechnung (A) und die Kontrollberechnung (B) in einer Recheneinrichtung (30 Co-P) ausgeführt werden, der mindestens ein Schlüssel-Registerspeicher (40) zugeordnet ist, auf dessen Speicherinhalt ausschließlich die Recheneinrichtung (30) lesende Zugriffsmöglichkeit hat, und wobei der Schlüssel (K) zur Ausführung der Berechnung (A) im Schlüssel-Registerspeicher (40) bereitgehalten wird, und wobei der Kontrollschlüssel (KC) zur Ausführung der Kontrollberechnung (B) im Schlüssel-Registerspeicher (40) bereitgehalten wird.

10. Verfahren nach Anspruch 9, wobei als Recheneinrichtung ein einem Mikroprozessor (20) zugeordneter Krypto-Coprozessor (30) vorgesehen ist.

## Claims

1. A method for executing a cryptographic computation (A) in protected manner, in which a cryptographic key (K) is employed, protected against an error attack (F) which aims at modifying the key (K), wherein in the method
- at least one check computation (B) corresponding to the computation (A) is carried out, in order to reveal an error attack (F) on the key (K), and,
- in the case that an error attack (F) on the key (K) is revealed, an error treatment measure is initiated,
**characterized in that**
in the check computation (B) a selected check key (KC) that is equal for different keys and equal selected check input data (IC) are employed.

2. The method according to claim 1, wherein as the selected check key (KC) a key is employed which is modified by an error attack (F) with particularly high reliability.

3. The method according to claim 1 or 2, wherein the key (K) and the check key (KC) each have a plurality of binary key bits which can each have a value of zero or one, and by whose values the value of the key (K) and/or of the check key (KC) is defined, and wherein all key bits of the check key (KC) have the same suitably chosen value, zero or one.

4. The method according to any one of claims 1 to 3, wherein the order in which the computation (A) and the check computation (B) are executed is determined in random-controlled manner.

5. The method according to any one of claims 1 to 4, wherein the check key (KC) is broken down into a first partial check key (KC1) and a second partial check key (KC2), which are complementary to each other, and wherein in the check computation (B) either the first partial check key (KC1) and the second partial check key (KC2) are employed or, alternatively, the first partial check key (KC1) is employed or, alternatively, the second partial check key (KC2) is employed.

6. The method according to any one of claims 1 to 5, wherein in a preparatory step:
- check input data (IC) and the check key (KC) are processed to form check output data (OC), and
- the check input data (IC) are stored as reference check input data (ICR) and the check output data (OC) are stored as reference check output data (OCR), and wherein
- in the computation input data (I) and the cryptographic key (K) are processed to form output data (O), and
- in the check computation the reference check input data (ICR) and the check key (KC) are processed to form check output data (OC) or the reference check output data (OCR) and a complementary key corresponding to the check key (KC) are processed to form check input data (IC).

7. The method according to claim 6, wherein a checksum is formed in each case over the check input data (IC) and/or the check output data (OC) and is stored in addition or alternatively to the check input data (IC) and/or the check output data (OC), and wherein the check input data (IC) and/or the check output data (OC) or the checksum thereover are employed in the check computation.

8. The method according to any one of claims 1 to 7, wherein at least one of the following measures is carried out as error treatment measure: modifying the value of an error counter, deleting memory cells of a memory (NVM 50), deactivating at least a portion of a device carrying out the computation and the check computation (µP 20, Co-P 30).

9. The method according to any one of claims 1 to 8, wherein the computation (A) and the check computation (B) are executed in a computing device (30 Co-P) to which there is allocated at least one key register memory (40), to whose memory contents a read access option is given exclusively for the computing device (30), and wherein the key (K) for executing the computation (A) is kept available in the key register memory (40), and wherein the check key (KC) for executing the check computation (B) is kept available in the key register memory (40).

10. The method according to claim 9, wherein as the computing device a crypto coprocessor (30) is provided which is allocated to a microprocessor (20).

## Revendications

1. Procédé d'exécution sécurisée d'un calcul cryptographique (A) dans lequel une clé cryptographique (K) est utilisée, sécurisé vis-à-vis d'une attaque en erreur (F) visant à modifier la clé (K), cependant que lors du procédé,
- au moins un calcul de contrôle (B) correspondant au calcul (A) est effectué afin de déceler une attaque en erreur (F) contre la clé (K), et,
- dans le cas où une attaque en erreur (F) contre la clé (K) est décelée, une mesure de traitement d'erreur est déclenchée,
**caractérisé en ce que**
lors du calcul de contrôle (B), une clé de contrôle (KC) sélectionnée et identique pour différentes clés et des données d'entrée de contrôle (IC) sélectionnées et identiques sont utilisées.

2. Procédé selon la revendication 1, cependant qu'en tant que clé de contrôle (KC) sélectionnée, c'est une clé modifiée avec une particulièrement grande fiabilité par une attaque en erreur (F) qui est sélectionnée.

3. Procédé selon la revendication 1 ou 2, cependant que la clé (K) et la clé de contrôle (KC) ont respectivement une pluralité de bits binaires de clé qui peuvent avoir respectivement une valeur zéro ou un et par les valeurs desquels la valeur de la clé (K) ou de la clé de contrôle (KC) est établie, et cependant que tous les bits de clé de la clé de contrôle (KC) ont la même valeur zéro ou un choisie de manière adaptée.

4. Procédé selon une des revendications de 1 à 3, **caractérisé en ce qu'**il est établi de manière aléatoire dans quel ordre le calcul (A) et le calcul de contrôle (B) sont exécutés.

5. Procédé selon une des revendications de 1 à 4, cependant que la clé de contrôle (KC) est fractionnée en une première clé de contrôle partielle (KC1) et en une deuxième clé de contrôle partielle (KC2) complémentaires l'une à l'autre, et cependant que, lors du calcul de contrôle (B), soit la première clé de contrôle partielle (KC1) et la deuxième clé de contrôle partielle (KC2) sont utilisées, ou, comme alternative, la première clé de contrôle (KC1) partielle est utilisée, ou, comme alternative, la deuxième clé de contrôle (KC2) partielle est utilisée.

6. Procédé selon une des revendications de 1 à 5, cependant que, lors d'une étape préparatoire :
- des données d'entrée de contrôle (IC) et la clé de contrôle (KC) sont traitées de manière à devenir des données de sortie de contrôle (OC), et
- les données d'entrée de contrôle (IC) sont mémorisées en tant que données d'entrée de contrôle de référence (ICR), et les données de sortie de contrôle (OC) en tant que données de sortie de contrôle de référence (OCR), et cependant que
- lors du calcul, des données d'entrée (I) et la clé cryptographique (K) sont traitées de manière à devenir des données de sortie (O), et
- lors du calcul de contrôle, les données d'entrée de contrôle de référence (ICR) et la clé de contrôle (KC) sont traitées de manière à devenir des données de sortie de contrôle (OC), ou les données de sortie de contrôle de référence (OCR) et une clé complémentaire correspondant à la clé de contrôle (KC) sont traitées de manière à devenir des données d'entrée de contrôle (IC).

7. Procédé selon la revendication 6, cependant que, par le biais des données d'entrée de contrôle (IC) et/ou des données de sortie de contrôle (OC), respectivement une somme de vérification est constituée et est mémorisée additionnellement ou comme alternative aux données d'entrée de contrôle (IC) ou aux données de sortie de contrôle (OC), et cependant que, lors du calcul de contrôle, les données d'entrée de contrôle (IC) ou les données de sortie de contrôle (OC) ou la somme de vérification en étant issue sont utilisées.

8. Procédé selon une des revendications de 1 à 7, cependant que, en tant que mesure de traitement d'erreur, au moins une des mesures suivantes est effectuée : modification de la valeur d'un compteur d'erreurs, suppression de cellules mémoire d'une mémoire (NVM 50), désactivation d'au moins une partie d'un dispositif (µP 20, Co-P 30) effectuant le calcul et le calcul de contrôle.

9. Procédé selon une des revendications de 1 à 8, cependant que le calcul (A) et le calcul de contrôle (B) sont exécutés dans un dispositif de calcul (30 Co-P) auquel est affectée au moins une mémoire à registres de clés (40) au contenu mémoire de laquelle exclusivement le dispositif de calcul (30) a accès en lecture, et cependant que la clé (K), pour l'exécution du calcul (A), est gardée à disposition dans la mémoire à registres de clés (40), et cependant que la clé de contrôle (KC), pour l'exécution du calcul de contrôle (B), est gardée à disposition dans la mémoire à registres de clés (40).

10. Procédé selon la revendication 9, cependant que, en tant que dispositif de calcul, c'est un coprocesseur de cryptographie (30) affecté à un microprocesseur (20) qui est prévu.
